# EUROPÄISCHE PATENTSCHRIFT

(11) **EP 0 813 704 B1**
(45) Veröffentlichungstag und Bekanntmachung des Hinweises auf die Patenterteilung: **19.02.2003**
(21) Anmeldenummer: 96904744.8
(22) Anmeldetag: 06.03.1996
(51) Int. Cl.: G05B 19/418

(54) **VERFAHREN ZUR STEUERUNG EINES PRODUKTIONSSYSTEMS**
METHOD OF CONTROLLING A PRODUCTION SYSTEM
PROCEDE DE COMMANDE D'UN SYSTEME DE PRODUCTION

(30) Priorität: 10.03.1995 DE 19508714
(43) Veröffentlichungstag der Anmeldung: 29.12.1997
(73) Patentinhaber: SIEMENS AKTIENGESELLSCHAFT, 80333 München (DE)
(72) Erfinder: HORN, Volker, D-90592 Schwarzenbruck (DE); HASSEL, Jörg, D-91058 Erlangen (DE)
(86) Internationale Anmeldenummer: DE9600398
(87) Internationale Veröffentlichungsnummer: WO96028773

(56) Entgegenhaltungen:
- US-A- 4 896 269
- US-A- 4 967 386
- PROCEEDINGS OF THE WINTER SIMULATION CONFERENCE, NEW ORLEANS, DEC. 9 - 12, 1990, Nr. CONF. 22, 9.Dezember 1990, BALCI O.;SADOWSKI R. P.; NANCE R. E., Seiten 599-602, XP000279720 MULLER D. J ET AL: "A SIMULATION-BASED WORK ORDER RELEASE MECHANISM FOR A FLEXIBLE MANUFACTURING SYSTEM"
- ZWF ZEITSCHRIFT FÜR WIRTSCHAFTLICHE FERTIGUNG UND AUTOMATISIERUNG, Bd. 88, Nr. 5, 1.Mai 1993, Seiten 226-228, XP000362654 STANEK W ET AL: "SIMULATION IN DER FABRIKPLANUNG UND FERTIGUNGSSTEUERUNG SIMULATION IN FACTORY PLANNING AND PRODUCTION CONTROL"

## Beschreibung

Die Effektivität und Überschaubarkeit eines Produktionsprozesses kann erheblich verbessert werden, wenn zu jeder Zeit bekannt ist, welchen Bearbeitungsvorgang ein Produkt gerade durchläuft, welcher Bearbeitungsvorgang wann und wo als nächster durchzuführen ist, kurz wenn sämtliche Vorgänge und Zustände eines Produktionsprozesses bekannt sind. Gerade bei der Aufspaltung in kleinere, fraktale Produktionssysteme ist es wichtig, optimal über den jeweiligen Zustand eines Produktionsprozesses informiert zu werden.

Bei bekannten Lösungen wurde versucht, in zentralen Leitständen ein vollständiges Istabbild eines Produktionssystems zu erhalten und sodann mit Algorithmen, die teilweise auf Schätzungen beruhten, den Herstellungsprozeß festzulegen. Damit können Störgrößen, die während des Herstellungsvorganges auftreten, beispielsweise durch Maschinenausfall, stockenden Materialfluß etc. nur unzureichend berücksichtigt werden.

Aus den Proceedings of the 1990 Winter Simulation Conference, New Orleans, Dec. 9 - 12, 1990, Nr. Conf. 22, 9. Dezember 1990, Balci O.; Sadowski R.P.; Nance R.E., Seiten 599 - 602, XP000279720, Daniel J. Mueller, John K. Jackman, Charles Fitzwater ist bekannt "A simulation-based work order release mechanism for a flexible manufacturing system". Dabei wird eine Simulation durch Parametervariation in einem zentralen "control room" vorgenommen.

Aufgabe der Erfindung ist es, die genannten Nachteile zu beseitigen.

Die Aufgabe wird durch ein Verfahren zur Steuerung eines Produktionssystems gemäß dem vorliegenden Anspruch 1 gelöst. Dabei werden die Parameter der Istzustände des Produktionssystems kontinuierlich erfaßt, mit den erfaßten Parametern wird das Produktionssystem simuliert und der Zeitablauf mindestens eines Produktionsprozesses prognostiziert. Die prognostizierte Gesamtheit wird mit einer vorgegebenen Zeit verglichen und die Abweichungen zwischen den prognostizierten Zeiten und den Istzeiten werden bereitgestellt.

Die Bereitstellung der Daten erfolgt durch lokale Anzeigeeinheiten an einzelnen Fertigungs- und Montagezellen oder an anderen Orten. Dies hat den Vorteil daß dort, wo die Abweichungen auftreten, entsprechende Maßnahmen, wie beispielsweise Erhöhung oder Reduzierung der Taktzeiten einer Maschine oder schnellere bzw. verzögerte Zuführung von Material, eingeleitet werden können, .

Nach einer vorteilhaften Ausgestaltung des Verfahrens kann die Simulation mit geänderten Parametern erneut durchgeführt werden, wenn die prognostizierte Gesamtzeit größer ist als die vorgegebene Zeit. Damit kann festgestellt werden, ob die jeweils für einen Produktdurchlauf bzw. Produktionsprozeß in einem gegebenen Produktionssystem vorgegebene Sollzeit überhaupt eingehalten werden kann oder ob die Zeit verlängert oder eventuell sogar noch eine weitere Fertigungslinie hinzugenommen werden muß.

Gemäß der Erfindung sind wahlweise die prognostizierten Zeiten, die Istzeiten, die Abweichungen zwischen den Zeiten sowie ein Trend der Abweichungen anzeigbar. Damit kann wieder an Ort und Stelle des jeweiligen Bearbeitungsvorganges festgestellt werden, ob der Bearbeitungsvorgang innerhalb der vorgegebenen Zeit liegt, ob eventuell eine der bereits oben beschriebenen Maßnahmen getroffen werden muß. Durch die Trendanzeige, läßt sich auf einfache Weise feststellen ob sich die eingeleiteten Maßnahmen bereits auf den Bearbeitungsvorgang ausgewirkt haben.

Für ein effektives Zusammenwirken mit anderen Produktionssystemen ist es vorteilhaft, wenn die in einem jeweiligen Produktionssystem erfaßten und simulierten Daten an weitere Produktionssysteme übermittelt werden. Diese Daten können dort entweder lediglich angezeigt werden oder auch als Parameter zur Simulation eines weiteren Produktionssystems mit verwendet werden.

Sind mehrere Sollzeiten, beispielsweise für unterschiedliche Produktionsprozesse, vorgegeben, so ist es vorteilhaft, wenn diese durch die Simulation prioritätsbezogen berücksichtigt werden.

Das Verfahren läßt sich mit einer Einrichtung durchführen, wobei Mittel zur Erfassung der Istzustände und Simulation eines Produktionssystems sowie Vorrichtungen zur Anzeige der Daten vorgesehen sind.

Ein Ausführungsbeispiel der Erfindung wird im folgenden anhand einer Figur beschrieben.

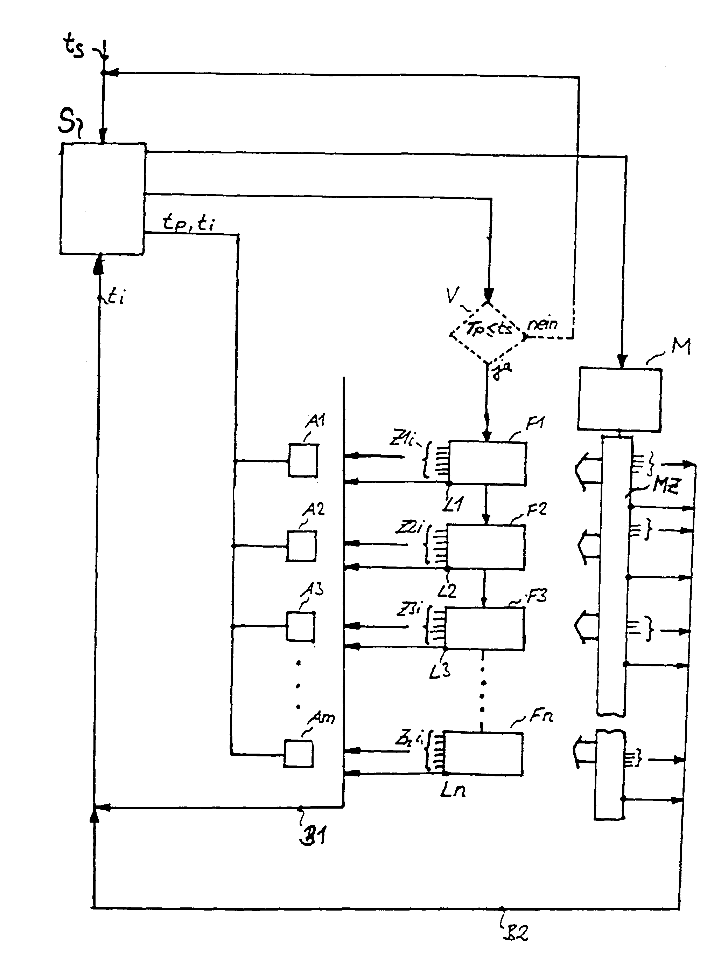

Die Figur zeigt eine schematische Darstellung eines Produktionssystems. Es besteht aus einer Simulationseinrichtung S, Anzeigeeinheiten A1 bis Am, einem Vergleicher V, Fertigungsund Montageeinheiten F1 bis Fn, von denen jeweils die Istzustände Z1i bis Zni abgegriffen werden, wobei i für die Anzahl der an der jeweiligen Fertigungs- und Montageeinheit F1 bis Fn abgegriffenen Istzustände Z1i bis Zni steht. Die Summe der an jeder dieser Einheit abgreifbaren Istzustände kann dabei jeweils verschieden sein. Außerdem ist am Ende einer jeden Fertigungs- und Montageeinheit F1 bis Fn ein sogenannter Logistikmeßpunkt L1 bis Ln vorgesehen. Weitere solche Logistikmeßpunkte sind hier nicht dargestellt; es können jedoch innerhalb einer Fertigungs- und Montageeinheit F1 bis Fn an beliebigen Stellen weitere vorgesehen werden.

An der Simulationsvorrichtung ist weiterhin eine Vorrichtung für die Materialbereitstellung M vorgesehen, durch die Zuführung der Arbeitsmittel und der Produkte zu den einzelnen Fertigungseinheiten F1 bis Fn über ein Materialzuführungssystem MZ gesteuert wird.

Das Verfahren zur Steuerung des Produktionssystems arbeitet wie folgt. Von den Fertigungs-/Montageeinheiten F1 bis Fn werden über Signalgeber die Istzustände Z1i bis Zni abgegriffen. Solche Istzustände können beispielsweise Arbeitsgeschwindigkeiten von Maschinen, Geschwindigkeiten und Fahrzeiten von Transportmitteln (wie Conveyor, fahrerlose Transportsysteme, etc.), zurückzulegende Entfernungen der Produkte, Maschinenstillstandszeiten, kurz alle technisch erfaßbaren Modelldaten eines Produktionsprozesses sein. Zusätzlich zu den Signalgebern, die Istzustände Z1i bis Zni erfassen, können über die Logistikmeßpunkte L1 bis Ln die Zeiten erfaßt werden, wann ein oder mehrere Produkte die jeweilige Fertigungs-/Montageeinheit verlassen. Weitere nicht dargestellte Logistikmeßpunkte könnten beispielsweise auch anzeigen, wann ein Produkt die nächste Fertigungs-/Montageeinheit erreicht oder wann Teilprozesse innerhalb einer Fertigungs-/Montageeinheit F1 bis Fn abgeschlossen sind.

Die Istzustände Z1i bis Zni und die an den Logistikmeßpunkten L1 bis Ln gemessenen Parameter werden über ein Bussystem B1 der Simulationsvorrichtung S kontinuierlich, zyklisch oder auf Anfrage zugeführt. Diese simuliert mit den erfaßten Parametern das Produktionssystem und prognostiziert den Zeitablauf mindestens eines Produktionsprozesses. Ebenso wie bei den Fertigungs- und Montageeinheiten F1 bis Fn können auch von der Materialzuführeinheit MZ die Istzustände und Logistikparameter abgegriffen werden und der Simulationseinheit S zur Simulation des Produktionsprozesses über das Bussystem B2 zur Verfügung gestellt werden. Selbstverständlich kann anstelle eines oder mehrerer Bussysteme auch eine drahtlose Übertragung vorgesehen sein.

Die Simulationsvorrichtung kann für jeden oder auch nur für Teile eines Arbeitsprozesses innerhalb der Fertigungs-/Montageeinheiten des Produktionssystems prognostizierte Zeiten tp berechnen und diese über die Anzeigeeinheiten A1 bis Am an oder in der Nähe der Fertigungseinheiten F1 bis Fn zur Anzeige bringen. An den Anzeigeeinheiten A1 bis Am sind aber auch noch die Abweichungen zwischen den prognostizierten Zeiten tp und den Istzeiten ti, sowie fakultativ eine Trendanzeige der Abweichungen anzeigbar. Entsprechend den von der Simulationseinrichtung berechneten Ergebnissen kann der Produktionsprozeß auch automatisch geregelt werden, indem beispielsweise die Arbeitsgeschwindigkeiten der Maschinen verändert werden.

Über die Materialbereitstellungsvorrichtung M kann die Simulationseinheit S vorgeben, wann welche Arbeits- und Produktionsmittel den einzelnen Fertigungseinheiten F1 bis Fn bereitzustellen sind. Dabei können auch die Istzustände der Materialzuführungsvorrichtung MZ in die Simulation des Produktionsprozesses mit einbezogen werden.

Mittels der fakultativen Vergleichsvorrichtung V kann die für einen Produktionsprozeß bzw. für einen Produktdurchlauf prognostizierte Gesamtzeit Tp mit der eingegebenen Sollzeit ts verglichen werden. Wenn die prognostizierte Gesamtzeit Tp größer ist, als die Sollzeit ts, kann der Produktionsprozeß eventuell mit anderen Parametern neu simuliert werden. Ist die prognostizierte Gesamtzeit Tp kleiner oder gleich der vorgegebenen Sollzeit ts, so kann der Produktionsprozeß eingeleitet werden.

Soweit weitere parallele Produktionssysteme voneinander abhängig sind bzw. ein Produkt in verschiedenen Produktionsprozessen bearbeitet wird, können über zusätzliche, hier nicht dargestellte Anzeigeeinheiten die Daten des jeweiligen Produktionssystems auch an die anderen Produktionssysteme - und umgekehrt - übermittelt werden. Dort können sie über die vorhandenen oder gesondert vorzusehenden Anzeigeeinheiten wahlweise angezeigt oder auch zur Simulation des jeweiligen Produktionssystems (mit-)verwendet werden.

## Patentansprüche

1. Verfahren zur Steuerung eines Produktionssystems, das aufeinanderfolgende Fertigungseinheiten (F1-Fn) aufweist, mit folgenden Schritten:
1.1 Die Parameter der Istzustände (Z1i-Zni) aller Fertigungseinheiten (F1-Fn) des Produktionssystems werden fortlaufend erfasst,
1.2 mit den erfassten Parametern der Istzustände (Z1i-Zni) und den ebenfalls erfassten Istzeiten (Zi), zu denen ein zu erstellendes Produkt die jeweiligen Fertigungseinheiten (F1-Fn) verlässt, wird das Produktionssystem simuliert und der im folgenden zu erwartende Zeitablauf des jeweiligen Produktionsprozesses prognostiziert,
1.3 die prognostizierte Gesamtzeit (Tp) wird mit der jeweils vorgegebenen Sollzeit (ts) verglichen,
1.4 wenn die prognostizierte Gesamtzeit (Tp) größer ist als die jeweils vorgegebene Sollzeit (ts), wird eine mögliche Verkürzung der prognostizierten Gesamtzeit (Tp) bis zum Erreichen der vorgegebenen Sollzeit (ts) durch Variation der Parameter der Istzustände (Z1i-Zni) versucht, wobei diese Variation zentral am Ort der Simulationsvorrichtung vorgenommen wird,
1.5 die prognostizierten Zeiten (tp) und die Istzeiten (ti) für die einzelnen Fertigungseinheiten (F1-Fn) und/oder die Abweichungen zwischen diesen Zeiten werden am Ort der Simulationsvorrichtung angezeigt,
**dadurch gekennzeichnet, dass** die prognostizierten Zeiten (tp) und die Istzeiten (ti) für die einzelnen Fertigungseinheiten (F1-Fn) und/oder die Abweichungen zwischen diesen Zeiten auch unmittelbar am Ort der Fertigungseinheiten (F1-Fn) auf lokalen Anzeigeeinheiten (A1-An) visualisiert werden, so dass auch dort ein Trend dieser Abweichungen angezeigt wird.

2. Verfahren nach Anspruch 1, **dadurch gekennzeichnet, dass** erfasste und simulierte Daten an weitere Produktionssysteme übermittelt werden, wo diese Daten anzeigbar sind und als Parameter zur Simulation weiterer Produktionsprozesse verwendet werden.

## Claims

1. Method for controlling a production system, which has consecutive manufacturing units (F1 - Fn), with the following stages:
1.1 The parameters of the actual statuses (Z1i - Zni) of all the manufacturing units (F1 - Fn) of the production system are recorded continuously,
1.2 The recorded parameters of the actual statuses (Z1i - Zni) and the actual times (Zi) also recorded, at which a product to be produced leaves the respective manufacturing units (F1 - Fn), are used to simulate the production system and to predict the time sequence of the respective production process subsequently to be anticipated,
1.3 The predicted total time (Tp) is compared with the predefined target time (ts) in each instance,
1.4 If the predicted total time (Tp) is longer than the predefined target time (ts) in each instance, a possible reduction of the predicted total time (Tp) is attempted until the predefined target time (ts) is obtained by varying the parameters of the actual statuses (Z1i - Zni), with the parameters being varied centrally at the site of the simulation device,
1.5 The predicted times (tp) and actual times (ti) for the individual manufacturing units (F1 - Fn) and/or the differences between these times are displayed at the site of the simulation device,
**characterised in that** the predicted times (tp) and the actual times (ti) for the individual manufacturing units (F1 - Fn) and/or the differences between these times are also shown directly at the site of the manufacturing units (F1 - Fn) on local display units (A1 - An), so that a trend in these differences can also be displayed there.

2. Method according to Claim 1, **characterised in that** recorded and simulated data is transferred to other production systems, where this data can be displayed and is used as parameters for simulating other production processes.

## Revendications

1. Procédé pour la commande d'un système de production qui comporte des unités de fabrication (F1 à Fn) successives, ayant les étapes suivantes :
1.1 on détecte en continu les paramètres des états réels (Z1i à Zni) de toutes les unités de fabrication (F1 à Fn) du système de production,
1.2 avec les paramètres détectés des états réels (Z1i à Zni) et avec les temps réels (ti) également détectés, auxquels un produit à fabriquer quitte les unités de fabrication (F1 à Fn) respectives, on simule le système de production et on pronostique le déroulement temporel à attendre ensuite du processus de production respectif,
1.3 on compare le temps total pronostiqué (Tp) au temps de consigne (ts) respectivement prédéterminé,
1.4 si le temps total pronostiqué (Tp) est supérieur au temps de consigne (ts) respectivement prédéterminé, on essaie une possible réduction du temps total pronostiqué (Tp) jusqu'à atteindre le temps de consigne prédéterminé (ts) en modifiant les paramètres des états réels (Z1i à Zni), cette modification étant effectuée de manière centrale sur le lieu du dispositif de simulation,
1.5 sur le lieu du dispositif de simulation, on affiche les temps pronostiqués (tp) et les temps réels (ti) pour les différentes unités de fabrication (F1 à Fn) et/ou les écarts entre ces temps,
**caractérisé par le fait qu'**on visualise aussi les temps pronostiqués (tp) et les temps réels (ti) pour les différentes unités de fabrication (F1 à Fn) et/ou les écarts entre ces temps directement sur le lieu des unités d'affichage (F1 à Fn) sur des unités d'affichage locales (A1 à An) de manière à afficher là aussi la tendance de ces écarts.

2. Procédé selon la revendication 1, **caractérisé par le fait qu'**on transmet des données détectées et simulées à d'autres systèmes de production où ces données peuvent être affichées et sont utilisées comme paramètres pour la simulation d'autres processus de production.
